# EUROPÄISCHE PATENTANMELDUNG

(11) **EP 4 726 551 A1**
(43) Veröffentlichungstag der Anmeldung: **15.04.2026**
(21) Anmeldenummer: 24206170.3
(22) Anmeldetag: 11.10.2024
(51) Int. Cl.: G06F 11/07, G05B 19/042, G06F 11/30

(54) **VERFAHREN ZUM BETREIBEN EINES SICHERHEITSKRITISCHEN SYSTEMS**

(71) Anmelder: Hitachi Rail GTS Austria GmbH, 1200 Wien (AT)
(72) Erfinder: HAMETNER, Reinhard, 1200 Wien (AT); RESCH, Stefan Markus, 1200 Wien (AT); SÜNDER, Christoph, 1200 Wien (AT); THOMA, Siegfried, 1200 Wien (AT); KÖNIG, Nikolaus, 1200 Wien (AT); PLATTNER, Christoph, 1200 Wien (AT)
(74) Vertreter: Gibler & Poth Patentanwälte KG

(57) **Zusammenfassung**

Bei einem Verfahren (1) zum Betreiben eines sicherheitskritischen Systems, wobei eine Betriebssoftware (2) für das sicherheitskritische System auf einer Computerhardware (3) ausgeführt wird, wird vorgeschlagen, dass die Betriebssoftware (2) eine vorgegebene Schnittstelle (4) zum Empfang einer Hardwareinformationsmeldung aufweist, wobei eine Konfigurationsdatei (8) umfassend vorgegebene SOLL-Hardwareinformationen an die Schnittstelle (4) der Betriebssoftware (2) übermittelt wird, wobei von einer Informationssoftware (5) IST-Hardwareinformationen der Computerhardware (3), umfassend Sensordaten und eine Identifikation der Computerhardware (3), wiederkehrend erfasst werden, wobei die Informationssoftware (5) aus den IST-Hardwareinformationen die Hardwareinformationsmeldung erstellt und an die Schnittstelle (4) der Betriebssoftware (2) übermittelt, wobei durch die Betriebssoftware (2) überwacht wird, ob die Hardwareinformationsmeldung ein vorgegebenes Bewertungskriterium erfüllt, wobei bei Nichterfüllen des Bewertungskriteriums eine Fehlerprozedur durchgeführt wird.

## Beschreibung

Die Erfindung betrifft ein Verfahren zum Betreiben eines sicherheitskritischen Systems gemäß dem Oberbegriff des Patentanspruches 1.

Die Sicherheitsanforderungsstufe ist ein Begriff aus dem Gebiet der Funktionalen Sicherheit und wird nach der internationalen Norm gemäß IEC 61508/IEC61511 auch als Sicherheitsstufe oder Sicherheits-Integritätslevel (Safety Integrity Level, SIL) bezeichnet. Sie dient der Beurteilung elektrischer, elektronischer, programmierbarer elektronischer Systeme in Bezug auf die Zuverlässigkeit von Sicherheitsfunktionen. Für die Festlegung der Stufe der Sicherheitsintegrität ist unter anderem eine Betrachtung des Ausfallverhaltens hinsichtlich einer Ausfallsrate der betrachteten Baugruppe notwendig.

Sicherheitsfunktionen dienen in der Industrie dem Schutz der Gesundheit der in dem Betrieb beschäftigten Personen, der Umwelt und von Gütern. Solche Sicherheitsfunktionen werden durch einen Sicherheitskreis, der aus verschiedenen Betriebsmitteln wie beispielsweise Sensoren, Steuerungselementen und Aktuatoren bestehen kann, realisiert. Die Sicherheitsanforderungsstufe stellt ein Maß für die Zuverlässigkeit des Systems in Abhängigkeit von der Gefährdung dar.

Aus dem Stand der Technik sind Hardwareüberwachungen durch spezialisierte Mikrocontroller wie beispielsweise Board Management Controller (BMCs) bekannt, welche auf der Hauptplatine von Computersystemen, insbesondere von Servern, angeordnet sind. Der Board Management Controller erhält von Sensoren Daten betreffend Systemparameter wie beispielsweise eine Temperatur, die Umdrehungsgeschwindigkeit von Lüftern oder beispielsweise den Betriebssystemstatus. Der Board Management Controller kann diese Sensorwerte ausgeben und über das Netzwerk Alarmmeldungen an einen Systemadministrator versenden, falls Parameter außerhalb eines vorgegebenen Wertebereichs liegen und somit eine Störung des Systems wahrscheinlich ist.

Sogenannte Components Off The Shelf (COTS) -Hardware, welche ein kommerzielles Massenprodukt ist, ist am Markt oft nur für eine begrenzte Zeit erhältlich. Sofern solch eine Hardware defekt ist und ausgetauscht werden muss, muss die Betriebssoftware eines sicherheitskritischen Systems speziell an eine neue Hardware angepasst werden, was aufwendig und umständlich ist und wodurch Fehler, insbesondere bei dem Kompilieren der Betriebssoftware, entstehen können. Weiters ist eine Vielzahl herkömmlicher COTS-Hardware ungeeignet für ein sicherheitskritisches System da diese beispielsweise nicht genügend Sensoren aufweist oder weil das Design bzw. die Funktionsweise eines Board Management Controllers für die Anwendung ungeeignet ist. In diesem Fall muss auf spezielle MOTS-Hardware zurückgegriffen werden, welche speziell modifiziert wurde.

Aufgabe der Erfindung ist es daher ein Verfahren der eingangs genannten Art anzugeben, mit welchem die genannten Nachteile vermieden werden können, mit welchem ein Verfahren zum Betreiben eines sicherheitskritischen Systems derart weiterentwickelt werden kann, dass dieses sicher, flexibel und kostengünstig eingesetzt werden kann.

Erfindungsgemäß wird dies durch die Merkmale des Patentanspruches 1 erreicht.

Dadurch ergibt sich der Vorteil, dass die Betriebssoftware nicht extra an eine neue Computerhardware angepasst werden muss, wodurch Zeit gespart wird und Fehlerquellen, insbesondere bei dem Kompilieren der Betriebssoftware, vermieden werden können. Weiters kann durch die Konfigurationsdatei die Betriebssoftware flexibel an eine Computerhardware angepasst werden. Hierdurch muss nicht spezielle Hardware gekauft werden, welche schwer erhältlich ist. Die vorgegebene Schnittstelle ermöglicht es, dieselbe Betriebssoftware für mehrere Hardwareumgebungen einzusetzen, wobei mittels der Informationssoftware die IST-Hardwareinformationen der unterschiedlichen Computerhardware in eine einheitliche Form gebracht werden können, sodass diese von der Betriebssoftware immer auslesbar ist, unabhängig von der Computerhardware oder dem Betriebssystem. Durch das wiederkehrende Überwachen der IST-Hardwareinformationen der Computerhardware hinsichtlich eines vorgegebenen Bewertungskriteriums durch die Betriebssoftware und dem Durchführen einer Fehlerprozedur sofern das Bewertungskriterium nicht erfüllt wird, kann ein hoher Sicherheitslevel gewährleistet werden.

Die Unteransprüche betreffen weitere vorteilhafte Ausgestaltungen der Erfindung.

Die Erfindung wird unter Bezugnahme auf die beigeschlossene Zeichnung, in welcher lediglich eine bevorzugte Ausführungsform des Verfahrens beispielhaft dargestellt ist, näher beschrieben. Dabei zeigt:

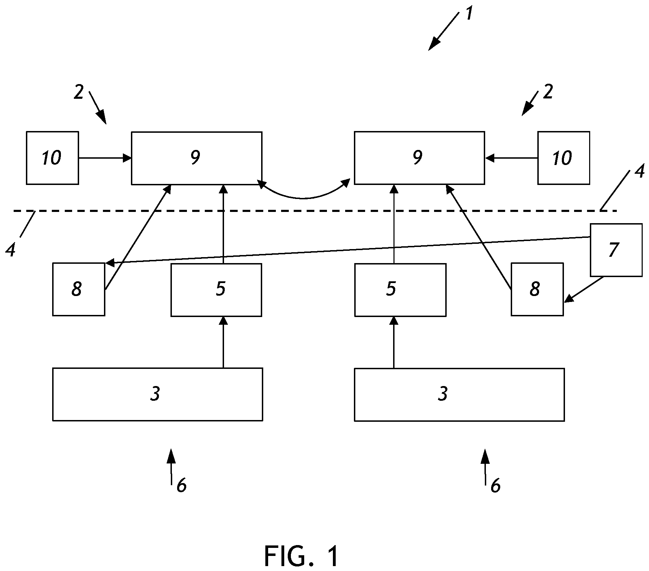

Fig. 1 eine beispielhafte schematische Darstellung eines Verfahrens zum Betreiben eines sicherheitskritischen Systems.

Die Fig. 1 zeigt eine schematische und beispielhafte Darstellung von zumindest Teilen von Schritten eines Verfahrens 1 zum Betreiben eines sicherheitskritischen Systems, wobei eine Betriebssoftware 2 für das sicherheitskritische System auf einer Computerhardware 3 ausgeführt wird, wobei die Betriebssoftware 2 eine vorgegebene Schnittstelle 4 zum Empfang einer Hardwareinformationsmeldung aufweist, wobei eine Konfigurationsdatei 8 umfassend vorgegebene SOLL-Hardwareinformationen an die Schnittstelle 4 der Betriebssoftware 2 übermittelt wird, wobei von einer Informationssoftware 5 IST-Hardwareinformationen der Computerhardware 3, umfassend Sensordaten und eine Identifikation der Computerhardware 3, wiederkehrend erfasst werden, wobei die Informationssoftware 5 aus den IST-Hardwareinformationen die Hardwareinformationsmeldung erstellt und an die Schnittstelle 4 der Betriebssoftware 2 übermittelt, wobei durch die Betriebssoftware 2 überwacht wird, ob die Hardwareinformationsmeldung ein vorgegebenes Bewertungskriterium erfüllt, wobei bei Nichterfüllen des Bewertungskriteriums eine Fehlerprozedur durchgeführt wird.

Dadurch ergibt sich der Vorteil, dass die Betriebssoftware 2 nicht extra an eine neue Computerhardware 3 angepasst werden muss, wodurch Zeit gespart wird und Fehlerquellen, insbesondere bei dem Kompilieren der Betriebssoftware 2, vermieden werden können. Weiters kann durch die Konfigurationsdatei 8 die Betriebssoftware 2 flexibel an eine Computerhardware 3 angepasst werden. Hierdurch muss nicht spezielle Hardware gekauft werden, welche schwer erhältlich ist. Die vorgegebene Schnittstelle 4 ermöglicht es, dieselbe Betriebssoftware 2 für mehrere Hardwareumgebungen einzusetzen, wobei mittels der Informationssoftware 5 die IST-Hardwareinformationen der unterschiedlichen Computerhardware 3 in eine einheitliche Form gebracht werden können, sodass diese von der Betriebssoftware 2 immer auslesbar ist, unabhängig von der Computerhardware 3 oder dem Betriebssystem. Durch das wiederkehrende Überwachen der IST-Hardwareinformationen der Computerhardware 3 hinsichtlich eines vorgegebenen Bewertungskriteriums durch die Betriebssoftware 2 und dem Durchführen einer Fehlerprozedur sofern das Bewertungskriterium nicht erfüllt wird, kann ein hoher Sicherheitslevel gewährleistet werden.

Ein sicherheitskritisches System ist ein System, dessen Ausfall oder Fehlfunktion zum Tod oder zu schweren Verletzungen von Menschen, zu dem Verlust oder der schweren Beschädigung von Infrastruktur und Sachgütern und zu Umweltschäden führen kann. Das sicherheitskritische System wird mittels einer Betriebssoftware 2 betrieben. Die Betriebssoftware 2 steuert hierbei Funktionen des sicherheitskritischen Systems. Aus diesem Grund ist es besonders wichtig, dass die Betriebssoftware 2 des sicherheitskritischen Systems stabil und zuverlässig funktioniert.

In sicherheitskritischen Systemen ist es wichtig, das Computerumfeld, insbesondere die Computerhardware 3, zu überwachen, damit eine sichere Funktion der Betriebssoftware 2 gewährleistet wird.

Das gegenständliche Verfahren ist ein computerimplementiertes Verfahren. Die Betriebssoftware 2 des sicherheitskritischen Systems wird auf einer Computerhardware 3 ausgeführt. Die Betriebssoftware 2 weist eine vorgegebene Schnittstelle 4 zum Empfang einer Hardwareinformationsmeldung auf. Die Konfigurationsdatei 8 umfasst vorgegebene SOLL-Hardwareinformationen und wird an die Schnittstelle 4 der Betriebssoftware 2 übermittelt.

Bevorzugt wird die Konfigurationsdatei 8 initial bzw. einmalig pro neuer Computerhardware 3 und/oder neuer Version der Betriebssoftware 2 übertragen. Die Konfigurationsdatei 8 wird hierbei insbesondere an ein Socket Interface der Schnittstelle 4 übertragen. Die Konfigurationsdatei 8 weist eine Hardwarebeschreibung der Computerhardware 3 auf.

Von der Informationssoftware 5 wird die Hardwareinformationsmeldung umfassend IST-Hardwareinformationen der Computerhardware 3, umfassend Sensordaten und eine Identifikation der Computerhardware 3, wiederkehrend erfasst. Die Identifikation der Computerhardware 3 ist eindeutig und kann beispielsweise die Seriennummer eines Mainboards und/oder eine generierte UUID zur Installation des Betriebssystems umfassen.

Die Informationssoftware 5 erstellt aus den IST-Hardwareinformationen die Hardwareinformationsmeldung und übermittelt diese an die Schnittstelle 4 der Betriebssoftware 2. Die Hardwareinformationsmeldung wird wiederkehrend, insbesondere in vorgebbaren periodischen Abständen, an die Schnittstelle 4 übermittelt. Die erste, an die Schnittstelle 4 übermittelte Hardwareinformationsmeldung kann bevorzugt auch Informationen betreffend die Version des Betriebssystems, Informationen betreffend den Prozessor wie beispielsweise die Anzahl der Prozessorkerne, und/oder beispielsweise Informationen betreffend den Arbeitsspeicher enthalten.

Durch die Betriebssoftware 2 wird überwacht, ob die Hardwareinformationsmeldung ein vorgegebenes Bewertungskriterium erfüllt.

Das Bewertungskriterium kann bevorzugt darin bestehen, dass IST-Werte in einem SOLL-Wertebereich liegen. Das Bewertungskriterium kann weiters darin bestehen, dass die IST-Werte in dem SOLL-Wertebereich nicht zu weit voneinander divergieren.

Ein Nichterfüllen des Bewertungskriteriums kann beispielsweise darin bestehen, dass IST-Werte außerhalb des SOLL-Wertebereichs liegen oder gar keine oder zu wenige Werte durch Sensoren ermittelt werden.

Bei Nichterfüllen des Bewertungskriteriums wird eine Fehlerprozedur durchgeführt. Die Fehlerprozedur kann bevorzugt eine Ausgabe einer Fehlermeldung oder einer Warnmeldung an einen Benutzer, insbesondere an einen Systemadministrator, umfassen. Die Fehlerprozedur kann auch das Durchführen weiterer Schritte durch weitere Programme umfassen.

Die gegenständliche Erfindung kann bevorzugt bei Zugsystemen, insbesondere bei Stellwerken, Weichen und/oder Signalanlagen, bei Systemen betreffend Flugzeuge, bei der Flugzeugleitung am Flughafen direkt, bei dem autonomen Fahren in Produktionsanlagen, insbesondere in einem zentralen Datencenter, angewendet werden.

Es kann bevorzugt vorgesehen sein, dass die Schnittstelle zum Empfang der Hardwareinformationsmeldung eine Binärschnittstelle ist. Diese Schnittstelle ist vorzugsweise application binary interface (ABI)-kompatibel.

Es kann besonders bevorzugt vorgesehen sein, dass die Betriebssoftware 2 nach dem Fail-Safe-Prinzip auf wenigstens zwei voneinander unabhängigen Kanälen 6 ausgeführt wird. Die wenigstens zwei voneinander unabhängigen Kanäle 6 können beispielsweise wenigstens zwei Computer oder zwei Kanäle eines Computers oder Servers sein. Hierdurch kann ein hohes Sicherheitslevel erreicht werden.

Es kann auch bevorzugt vorgesehen sein, dass die Betriebssoftware 2 nach dem Composite-Fail-Safe-Prinzip auf den wenigstens zwei voneinander unabhängigen Kanälen 6 ausgeführt wird, wobei durch die Fehlerprozedur ein Sicherheitsmodus des sicherheitskritischen Systems aktiviert wird. Der Sicherheitsmodus kann beispielsweise gewisse Funktionen einschränken oder die Ausübung von Funktionen gänzlich verhindern. Es kann auch vorgesehen sein, dass bei einem Fehler in einem Kanal der fehlerhafte Kanal alleine und zusätzlich auch der andere Kanal abgeschalten werden. Hierdurch kann das Sicherheitslevel zusätzlich erhöht werden.

Bevorzugt kann vorgesehen sein, dass die Betriebssoftware 2 in wenigstens einer virtuellen Maschine ausgeführt wird.

Die Schnittstelle 5 fungiert insbesondere als Grenze zur realen Umgebung. Die Betriebssoftware 2 wird hierbei auf wenigstens einer virtuellen Maschine ausgeführt und kommuniziert mit der in der Außenwelt befindlichen Informationssoftware 5 über die Schnittstelle 4.

Es kann auch besonders bevorzugt vorgesehen sein, dass die wenigstens eine virtuelle Maschine in einer Cloud betrieben wird. Hierbei wird die virtuelle Maschine sozusagen dezentral in Hinblick auf die Computer des Betriebs, demnach cloudbasiert betrieben, vorzugsweise auf den Servern eines Dritten. Bei dieser Variante werden die Steuerbefehle für Aktuatoren an das Betriebsmittel, beispielsweise eine Signalanlage, von der Betriebssoftware 2, welche auf der wenigstens einen in der Cloud ausgeführten virtuellen Maschine betrieben wird, aus gesendet. Vorteilhaft ist hierbei unter anderem die Rechenleistung und Sicherheitssysteme eines Dritten nutzen zu können. Obwohl die Betriebssoftware 2 hierbei in einer virtuellen Maschine auf einem Server läuft, ist die Ausfallsrate der Hardware des Servers bekannt. Hierzu müssen vorab technische Informationen betreffend die Hardware des Servers eingeholt und in die Konfigurationsdatei 8 aufgenommen werden.

Es kann auch bevorzugt vorgesehen sein, dass die Informationssoftware 5 außerhalb der wenigstens einen virtuellen Maschine ausgeführt wird. Hierdurch wird die Betriebssoftware 2 von der Informationssoftware 5 sozusagen entkoppelt, bzw. auf zwei unterschiedliche Ebenen aufgeteilt.

Weiters kann bevorzugt vorgesehen sein, dass die Konfigurationsdatei 8 Informationen zu der für das Betreiben des sicherheitskritischen Systems vorgesehenen Version der Betriebssoftware 2 aufweist, wodurch eine gute Abstimmung der Konfigurationsdatei 8 hinsichtlich der Betriebssoftware 2 und der Computerhardware 3 ermöglicht wird.

Besonders bevorzugt kann vorgesehen sein, dass die in der Konfigurationsdatei 8 enthaltenen SOLL-Hardwareinformationen in einem Qualifizierungsprozess 7 ermittelt wurden und zulässige Wertebereiche der Computerhardware 3 umfassen. Durch den Qualifizierungsprozess 7 kann die Konfigurationsdatei 8 validiert werden.

Die Betriebssoftware 2 wird bevorzugt prozesstechnisch validiert, während die Informationssoftware 5 keine besonderen Anforderungen hinsichtlich eines Sicherheitslevels hat.

Bevorzugt kann vorgesehen sein, dass die Wertebereiche Spannungsbereiche und/oder Temperaturbereiche der Computerhardware 3 umfassen. In diesen Wertebereichen der Computerhardware 3 kann die Betriebssoftware 2 sicher und stabil ausgeführt werden.

In dem Qualifizierungsprozess 7 wird die Eignung von Computerhardware 3 für die Betriebssoftware 2 des sicherheitskritischen Systems überprüft.

Es kann auch bevorzugt vorgesehen sein, dass die Konfigurationsdatei 8 Bedingungen umfasst, mit welchen die Informationssoftware 5 zusätzliche Sensordaten aus bestehenden Sensordaten generieren kann. Insbesondere werden hierbei technische Daten der Computerhardware 3, insbesondere ein zulässiger Temperaturbereich und/oder ein zulässiger Spannungsbereich von Komponenten der Computerhardware 3, und Informationen zu der zu überprüfenden Version der Betriebssoftware 2 des sicherheitskritischen Systems, erfasst und als Rahmenbedingungen in die Konfigurationsdatei 8 implementiert.

Es kann bevorzugt vorgesehen sein, dass beispielsweise bei zwei zueinander benachbarten Platinen die Sensoren der benachbarten Platine mitverwendet werden, sofern die erste Platine nicht ausreichend Sensoren aufweist. Beispielsweise können bei einer Überhitzung der ersten Platine die Sensoren der zweiten benachbarten Platine erhöhte Wärme, welche von der ersten Platine abgestrahlt wird, erfassen.

Es kann auch bevorzugt vorgesehen sein, dass die Konfigurationsdatei 8 Mindestanforderungen für die Computerhardware 3, insbesondere einen Mindestarbeitsspeicher, einen Mindestarbeitstakt der CPU und/oder eine Mindesttaktfrequenz des Arbeitsspeichers, aufweist.

Nachfolgend wird in dem Qualifizierungsprozess 7 die Betriebssoftware 2 in einer virtuellen und/oder realen Testumgebung unter Berücksichtigung der Konfigurationsdatei 8 auf der zu überprüfenden Computerhardware 3 ausgeführt. Hierbei wird die Betriebssoftware 2 mit der zu überprüfenden Computerhardware in der Testumgebung auf Stabilität und/oder Performancekennzahlen getestet. Bei einem erfüllten Bewertungskriterium hinsichtlich der Stabilität der Betriebssoftware 2 und/oder bei einem erfüllten Bewertungskriterium hinsichtlich der Performancekennzahlen wird die Konfigurationsdatei 8 behalten und das sicherheitskritische System mit der getesteten Computerhardware 3 wird für die Ausführung in einer Umgebung mit Sicherheitsverantwortung bereitgehalten.

Hierzu wird bevorzugt eine Fehlerrate der Computerhardware 3 in Hinblick auf die Betriebssoftware 2 ermittelt werden, welche bei der Einstufung hinsichtlich der Sicherheitsstufe bzw. der Sicherheit des Systems berücksichtigt wird.

Die virtuelle und/oder reale Testumgebung ist eine Umgebung ohne Sicherheitsverantwortung.

Hierdurch kann gewährleistet werden, dass die neue zur Verwendung bestimmte Computerhardware 3 für die Betriebssoftware 2 geeignet ist. Eine im Stand der Technik verwendete speziell modifizierte Computerhardware 3 (MOTS) und/oder eine Aufwendige Anpassung der Betriebssoftware 2 an die neue Computerhardware 3 ist somit nicht notwendig

Die Konfigurationsdatei 8 ist sicherheitsrelevant. Damit die Konfigurationsdatei 8 vor unberechtigten Modifikationen geschützt ist, kann weiters vorgesehen sein, dass die Integrität der Konfigurationsdatei 8 mittels einer Prüfsumme abgesichert ist. Hierdurch kann die Integrität der Konfigurationsdatei 8 auf einfache Weise sichergestellt werden.

In Fig. 1 ist beispielhaft und schematisch zumindest ein Ausschnitt des Verfahrens 1 zum Betreiben eines sicherheitskritischen Systems dargestellt.

Die Betriebssoftware 2 wird auf einer Computerhardware 3 ausgeführt. Betreffend technische Informationen der Computerhardware 3 wird eine Hardwareinformationsmeldung von der Informationssoftware 5 erstellt. Die Hardwareinformationsmeldung enthält Informationen betreffend die IST-Hardwareinformationen umfassend zumindest Sensordaten und eine Identifikation der Computerhardware 3. Die Hardwareinformationsmeldung wird mittels der Informationssoftware 5 an die Schnittstelle 4 der Betriebssoftware 2 übermittelt. Vorgegebene SOLL-Hardwareinformationen wurden, wie zuvor ausgeführt, in einem vorherigen Schritt in dem Qualifizierungsprozess 7 ermittelt.

Die Betriebssoftware 2 kann ein oder mehr als ein Programm umfassen. In der Fig. 1 ist eine beispielhafte Ausführungsvariante dargestellt, in welcher die Betriebssoftware 2 zwei Programme umfasst. Ein Überwachungs- und Überprüfungsprogramm 9 der Betriebssoftware 2 erhält hierbei die Hardwareinformationsmeldung mit den IST-Hardwareinformationen. Vorab hat die Betriebssoftware 2, insbesondere das Überwachungs- und Überprüfungsprogramm 9 der Betriebssoftware 2, die Konfigurationsdatei 8 mit vorgegebenen SOLL-Hardwareinformationen erhalten. Das Überwachungs- und Überprüfungsprogramm 9 der Betriebssoftware 2 überprüft, ob die IST-Hardwareinformationen das vorgegebene Bewertungskriterium, insbesondere vorgegebene Spannungsbereiche und/oder Temperaturbereiche, der Computerhardware 3 erfüllen. Zusätzlich umfasst die Betriebssoftware 2 in dieser Ausführungsvariante ein Ausführungsprogramm 10, welches das Überwachungs- und Überprüfungsprogramm 9 überwacht bzw. unterstützt. Das Ausführungsprogramm 10 führt hierbei weiters die Funktionen des sicherheitskritischen Systems aus.

Durch diese Kontroll- bzw. Überwachungsmethode durch das Zusammenspiel des Überwachungs- und Überprüfungsprogrammes 9 mit dem Ausführungsprogramm 10 wird ein hoher Sicherheitslevel ermöglicht.

Wie in der Figur 1 beispielhaft dargestellt ist, werden bei dieser Ausführungsvariante bevorzugt zwei Kanäle 6 verwendet. Im gegenständlichen Fall wird zweimal eine Computerhardware 3 auf zwei Kanälen 6 nach dem Fail-Safe-Prinzip verwendet. Durch einen Doppelpfeil ist angedeutet, dass das Überwachungs- und Überprüfungsprogramm 9 des ersten Kanals 6 mit dem Überwachungs- und Überprüfungsprogramm 9 des zweiten Kanals 6 kommuniziert.

Bevorzugt kann die gegenständliche Erfindung außerdem in folgenden beispielhaften Anwendungsfällen angewendet werden:

### Anwendungsfall 1: Das BMC-Design für eingebettete Boards ist unzureichend.

Der erste Anwendungsfall ist eine Embedded-Board-Hardware-Lösung. Hierbei wird derselbe Typ von Mainboard sowohl für einen Sicherheitsbewertungsprozess als auch für den Betrieb im Feld mit Sicherheitsverantwortung verwendet. Eine solche eingebettete Hardwarelösung verfügt über spezielle I/O (input and output)-Unterstützung für Kommunikationszwecke und ist zudem langfristig auf dem Markt verfügbar. Während der Sicherheitsanalyse kann festgestellt werden, dass der Überwachungsmechanismus des BMCs in Hinblick auf die Verhinderung der Systemausführung im Falle einer Verletzung des Bewertungskriteriums, welche mit dem verfügbaren Mainboard allein bereitgestellt werden, unzureichend ist. Hier kann das Überwachungs- und Überprüfungsprogramm 9 der Betriebssoftware 2 eingesetzt werden, um einen sicheren Betrieb zu verhindern. Dies wird durch die Bereitstellung einer geeigneten Hardwarebeschreibung hinsichtlich vorgegebener SOLL-Hardwareinformationen in der Konfigurationsdatei 8 erreicht, in der die bedingten Prüfungen aufgeführt sind. Daher kann ein Mainboard, welches möglicherweise nicht das erforderliche Maß an Hardwareüberwachung erfüllt, dennoch für sicherheitskritische Systeme verwendet werden.

### Anwendungsfall 2: Das eingebettete Board weist unzureichende Sensoren auf.

Der zweite beispielhafte Anwendungsfall ist eine eingebettete Hardwarelösung wie im ersten Anwendungsfall beschrieben, die jedoch nicht über ausreichende Sensoren verfügt. Wenn beispielsweise nur ein Temperatursensor für die Umgebungstemperatur einer Platine zur Verfügung steht, kann das Überwachungs- und Überprüfungsprogramm 9 der Betriebssoftware 2 auf diesen Platinen verwendet werden, um die Erkennungsmöglichkeiten von Sensorfehlern zu erhöhen, indem ein Gradientenwert abgeleitet und geprüft wird, ob seine Grenzen im Hinblick auf das physikalische Modell realistisch sind. Es kann weiters geprüft werden, ob die Differenz bzw. das Delta zwischen Umgebungstemperatursensoren zweier Platinen eines zusammengesetzten ausfallsicheren Systems einen bestimmten Schwellenwert nicht überschreitet. Dies wird durch eine geeignete Hardwarebeschreibung in der Konfigurationsdatei 8 erreicht, in der diese Prüfungen aufgeführt sind. Zusammen mit der Bedingung, dass diese Platinen in der endgültigen Installation nebeneinander im selben Gestell untergebracht sein müssen, kann eine Platine, die ansonsten möglicherweise das erforderliche Level der Hardware-Überwachung alleine nicht vollständig erfüllt, dennoch für sicherheitskritische Systeme verwendet werden.

### Anwendungsfall 3: Server-Hardware, bei welcher das BMC-Design unbekannt ist

Der dritte beispielhafte Anwendungsfall ist jener einer Computerhardware 3, insbesondere Server-Hardware, bei welcher das BMC-Design unbekannt ist. Sicherheitskritische Systeme, die Server-Hardware nutzen, verwenden keine spezielle I/O Unterstützung mehr, sondern in der Regel Protokolle über IP (Internetprotokoll) für ihre Kommunikation. Solche Server haben auch eine kurze Lebensdauer auf dem Markt. Ein wesentlicher Unterschied zum Anwendungsfall des Embedded Boards besteht darin, dass der genaue Hardwaretyp, der für das Sicherheitsbewertungsverfahren verwendet wird, ein anderer sein kann als der Hardwaretyp, der für den Feldbetrieb mit Sicherheitsverantwortung verwendet wird. Mit dem vorgestellten Ansatz ist es möglich, die Sicherheitsbewertung auf dem Qualifizierungsprozess 7 und der daraus resultierenden HardwareBeschreibung in der Kofigurationsdatei 8 aufzubauen, anstatt sich vollständig auf einen bestimmten Servertyp zu konzentrieren. Allerdings ist hierbei das Überwachungs- und Überprüfungsprogramm 9 selbst Teil des Sicherheitsbewertungsverfahrens. Dies ermöglicht es auch, bestimmte Bedingungen an die resultierende Hardwarebeschreibung zu knüpfen, wie beispielsweise die Anzahl oder die Art der Sensoren. Wenn nun ein bestimmter Servertyp verwendet wird, der nicht Gegenstand der Sicherheitsbewertung selbst war, wird der Qualifizierungsprozess 7 verwendet, um die Hardwarebeschreibung zu erstellen und die Eignung der Serverhardware beispielsweise in Bezug auf die Leistung oder die mittlere Betriebsdauer zwischen Ausfällen (MTBF) sicherzustellen. Dieser Ansatz ermöglicht die Verwendung eines Server-Hardwaretyps, der nicht explizit Teil der Sicherheitsbewertung selbst war.

Nachfolgend werden Grundsätze für das Verständnis und die Auslegung gegenständlicher Offenbarung angeführt.

Merkmale werden üblicherweise mit einem unbestimmten Artikel "ein, eine, eines, einer" eingeführt. Sofern es sich aus dem Kontext nicht anders ergibt, ist daher "ein, eine, eines, einer" nicht als Zahlwort zu verstehen.

## Patentansprüche

1. Verfahren (1) zum Betreiben eines sicherheitskritischen Systems,
wobei eine Betriebssoftware (2) für das sicherheitskritische System auf einer Computerhardware (3) ausgeführt wird,
wobei die Betriebssoftware (2) eine vorgegebene Schnittstelle (4) zum Empfang einer Hardwareinformationsmeldung aufweist,
wobei eine Konfigurationsdatei (8) umfassend vorgegebene SOLL-Hardwareinformationen an die Schnittstelle (4) der Betriebssoftware (2) übermittelt wird,
wobei von einer Informationssoftware (5) IST-Hardwareinformationen der Computerhardware (3), umfassend Sensordaten und eine Identifikation der Computerhardware (3), wiederkehrend erfasst werden,
wobei die Informationssoftware (5) aus den IST-Hardwareinformationen die Hardwareinformationsmeldung erstellt und an die Schnittstelle (4) der Betriebssoftware (2) übermittelt,
wobei durch die Betriebssoftware (2) überwacht wird, ob die Hardwareinformationsmeldung ein vorgegebenes Bewertungskriterium erfüllt,
wobei bei Nichterfüllen des Bewertungskriteriums eine Fehlerprozedur durchgeführt wird.

2. Verfahren (1) nach Anspruch 1, **dadurch gekennzeichnet, dass** die Betriebssoftware (2) nach dem Fail-Safe-Prinzip auf wenigstens zwei voneinander unabhängigen Kanälen (6) ausgeführt wird.

3. Verfahren (1) nach Anspruch 2, **dadurch gekennzeichnet, dass** die Betriebssoftware (2) nach dem Composite-Fail-Safe-Prinzip auf den wenigstens zwei voneinander unabhängigen Kanälen (6) ausgeführt wird, wobei durch die Fehlerprozedur ein Sicherheitsmodus des sicherheitskritischen Systems aktiviert wird.

4. Verfahren (1) nach einem der Ansprüche 1 bis 3, **dadurch gekennzeichnet, dass** die Betriebssoftware (2) in wenigstens einer virtuellen Maschine ausgeführt wird.

5. Verfahren (1) nach einem der Ansprüche 1 bis 4, **dadurch gekennzeichnet, dass** die wenigstens eine virtuelle Maschine in einer Cloud betrieben wird.

6. Verfahren (1) nach Anspruch 4 oder 5, **dadurch gekennzeichnet, dass** die Informationssoftware (5) außerhalb der wenigstens einen virtuellen Maschine ausgeführt wird.

7. Verfahren (1) nach einem der Ansprüche 1 bis 6, **dadurch gekennzeichnet, dass** die Konfigurationsdatei (8) Informationen zu der für das Betreiben des sicherheitskritischen Systems vorgesehenen Version der Betriebssoftware (2) aufweist.

8. Verfahren (1) nach einem der Ansprüche 1 bis 7, **dadurch gekennzeichnet, dass** die in der Konfigurationsdatei (8) enthaltenen SOLL-Hardwareinformationen in einem Qualifizierungsprozess (7) ermittelt wurden und zulässige Wertebereiche der Computerhardware (3) umfassen.

9. Verfahren (1) nach Anspruch 8, **dadurch gekennzeichnet, dass** die Wertebereiche Spannungsbereiche und/oder Temperaturbereiche der Computerhardware (3) umfassen.

10. Verfahren (1) nach einem der Ansprüche 1 bis 9, **dadurch gekennzeichnet, dass** die Konfigurationsdatei (8) Bedingungen umfasst, mit welchen die Informationssoftware (5) zusätzliche Sensordaten aus bestehenden Sensordaten generieren kann.

11. Verfahren (1) nach einem der Ansprüche 1 bis 10, **dadurch gekennzeichnet, dass** die Integrität der Konfigurationsdatei (8) mittels einer Prüfsumme abgesichert ist.
